# EUROPEAN PATENT SPECIFICATION

(11) **EP 2 033 887 B1**
(45) Date of publication and mention of the grant of the patent: **10.03.2010**
(21) Application number: 08252909.0
(22) Date of filing: 02.09.2008
(51) Int. Cl.: B62K 11/04, B62K 19/12

(54) **Frame for vehicle and motorcycle provided with the same**
Fahrzeugrahmen und Motorrad damit ausgerüstet
Cadre pour véhicule et motocyclette dotée de celui-ci

(30) Priority: 04.09.2007 JP 2007229059
(43) Date of publication of application: 11.03.2009
(73) Proprietor: Yamaha Hatsudoki Kabushiki Kaisha, Iwata-shi, Shizuoka-ken 438-8501 (JP)
(72) Inventor: Uchida, Haruhisa, Iwata-shi Shizuoka-ken 438-8501 (JP)
(74) Representative: Harris, Ian Richard

(56) References cited:
- EP-A- 1 550 605
- JP-A- 2006 232 166
- US-A1- 2007 007 758
- US-A1- 2007 018 420

## Description

### Technical Field

The present invention relates to a frame for a vehicle and a vehicle, for example a motorcycle, provided with the frame.

### Background Art

In recent years, for the purpose of reducing the weight of an automobile and the like, it is proposed to use magnesium-based material such as magnesium alloy for vehicle structure parts (for example, see Japanese Unexamined Patent Publication No. 2002-188616). In a similar way, one might consider reducing the weight of a motorcycle, for example by forming the rear frame of the motorcycle of magnesium-based material.

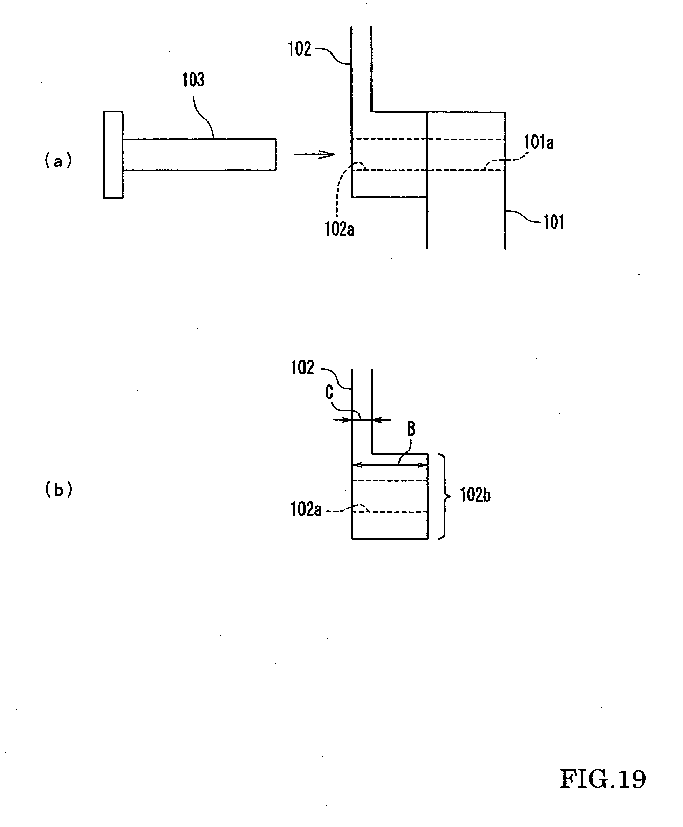

As shown in Fig. 19(a), a main frame 101 of a motorcycle is usually fastened to a rear frame 102 with a fastening part 103 such as a bolt or a screw in a state where one portion of one of the frames is placed on one portion of the other frame in a vehicle width direction (in other words, in a left and right direction). The main frame 101 and the rear frame 102 have through holes 101a, 102a formed therein, the through holes 101a, 102a having the fastening part 103 passed therethrough.

Such a magnesium-based material is material having a low specific heat. For this reason, when a rear frame 102 is cast of the magnesium-based material, there is the possibility that the rear frame 102 will cause a crack (a so-called solidification crack) in a portion having a locally relatively significant or large thickness.

However, the main frame 101 and the rear frame 102 are parts of the skeletal frames of a vehicle and hence need to be securely and strongly fixed to each other. For this reason, the fastening portion of the rear frame 102 needs to have a comparatively large contact, or sitting, surface 102b. However, as shown in Fig. 19(b), when the contact surface 102b is made large, the thickness B of a portion surrounding the through hole 102a is larger than the thickness C of the other portion. For this reason, there arises the problem that the rear frame 102 could cause a solidification crack in the periphery of its fastening portion.

EP-A-1,550,605 discloses a rear frame of a motorcycle which is of a longitudinally elongated shape and is provided with a pair of right and left rail parts connected by a plurality of cross members. The rear frame is formed by die-casting and a plurality of gate parts to pour the molten metal through are located separately along the rail parts. It is possible to shorten the metal pouring process and prevent casting defects such as underfills. This document, which discloses a frame member for a vehicle according to the preamble of claim 1, provides no disclosure in respect of, at least, a frame member cast from magnesium-based material, nor an average thickness of a part of the main portion adjacent the fastening portion being substantially equal to the thicknesses of each of the side portions of the recessed portion and to the thickness between the bottom surface of the recessed portion and the inner peripheral surface of the through hole.

JP-A-2006-232166 discloses a seat frame for a motorcycle made of magnesium alloy.

US-A-2007/018420 discloses a reinforced motorcycle frame.

US-A-2007/007758 discloses a body frame structure for a straddle-type four wheeled vehicle.

The present invention seeks to provide a frame for a vehicle that is made of magnesium-based material and which reduces the risk of a solidification crack being caused at the time of casting. Summary

Aspects of the invention are defined in the claims.

According to the present invention, there is provided a frame member for a vehicle, the frame member being cast of magnesium-based material and comprising a main portion and a fastening portion, the fastening portion having a through hole formed therein and the through hole being configured to receive a fastening part therethrough, wherein:
the fastening portion has a contact surface formed around at least one of one end of the through hole, the contact surface being for contacting another frame member,
the fastening portion has a recessed portion formed in a portion that is located outside in a radial direction with respect to the through hole and intermediate in an axial direction with respect to the through hole, the recessed portion being recessed towards the through hole, and
an average thickness of a part of the main portion adjacent the fastening portion is substantially equal to the thicknesses of each of the side portions of the recessed portion and to the thickness between the bottom surface of the recessed portion and the inner peripheral surface of the through hole.

A vehicle, for example a motorcycle, can be provided with the frame member as part of a frame of the vehicle.

According to the present invention, it is possible to realize a frame member for a vehicle frame, the frame member being made of magnesium-based material that resists the formation of a solidification crack at the time of casting.

It should be noted that the above description is solely one example for describing the object of the present invention, and a frame for a vehicle according to the present invention is not limited to a rear frame of a motorcycle.

### Brief Description of the Drawings

Embodiments of the invention are described hereinafter with reference to the accompanying drawings.
Fig. 1 is a side view of a motorcycle.
Fig. 2 is a plan view of the motorcycle.
Fig. 3 is a side view of a vehicle body frame.
Fig. 4 is a plan view of a rear frame.
Fig. 5 (a) is a section view taken on a line Va-Va of Fig. 5 (b).
Fig. 5(b) is a side view of a front side portion of the rear frame.
Fig. 6 is a plan view of a main frame and the rear frame.
Fig. 7 is a perspective view of the vicinity of an upper fastening portion of the rear frame.
Fig. 8 is a perspective view of the vicinity of a lower fastening portion of the rear frame.
Fig. 9 is a side view of a bolt in a state where a washer and a collar are fitted thereon.
Fig. 10 is a front view of a collar.
Fig. 11 is a section view of a fastening structure of the main frame and the rear frame.
Fig. 12 is a plan view of the rear frame and its inside portion in the motorcycle.
Fig. 13 is a plan view of a battery box.
Fig. 14 is a side view of a battery box.
Fig. 15(a) is a plan view of a tool band.
Fig. 15(b) is a section view taken on a line XVb-XVb in (a).
Fig. 16 is a side view of a seat lock device.
Fig. 17 is a perspective view of a portion of the seat lock device.
Fig. 18 is a section view of a bearing structure.
Fig. 19(a) is a view showing a fastening structure of a main frame and a rear frame in a related art.
Fig. 19(b) is an enlarged view of a fastening portion in the main frame in the related art.

### Detailed Description

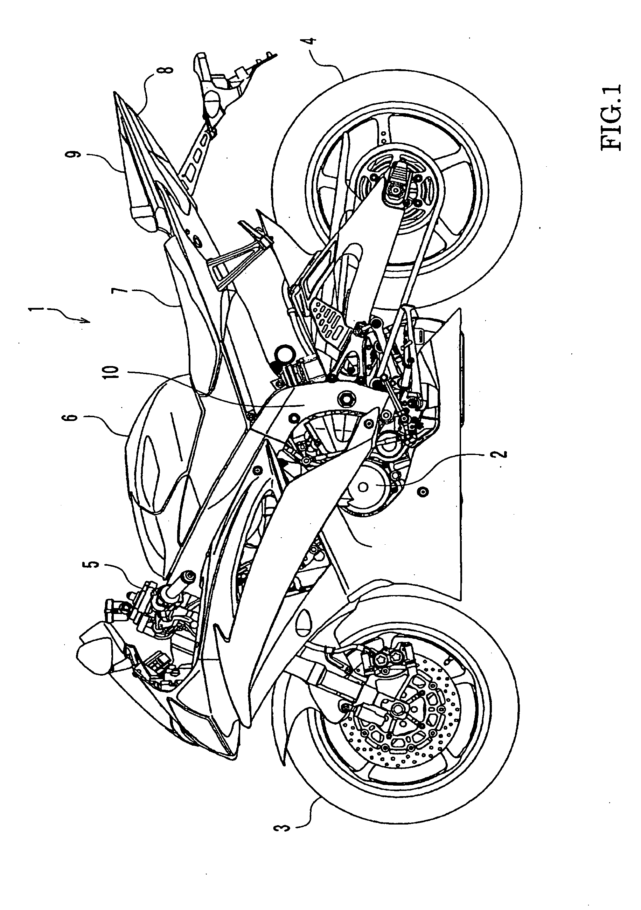

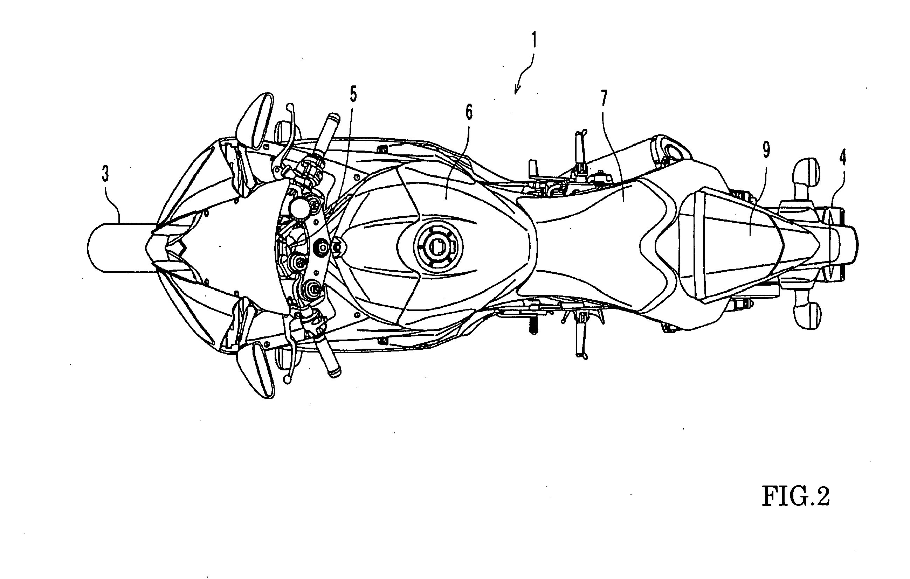

Fig. 1 and Fig. 2 provide a general description of an example of a motorcycle 1, as an example of a vehicle, for describing an embodiment of the invention. The motorcycle 1 includes a vehicle body frame 10, an engine 2 supported by the vehicle body frame 10, a front wheel 3, a rear wheel 4, a handlebar 5, a fuel tank 6, a main seat 7, and a tandem seat 9. The motorcycle 1 has a tail lamp unit 8 disposed on its rear side. The illustrated example of a motorcycle 1 for describing an embodiment of the invention is a motorcycle-type vehicle. However, the invention is not limited to such a motorcycle, or a motorcycle of a special kind, but may be a motocross type motorcycle, a moped, a scooter, another form of straddle-type vehicle, and so forth. Here, it is assumed that the respective directions of front, rear, left, and right directions in the following description means the respective directions of front, rear, left, and right directions when viewed from a rider seated on the main seat 7.

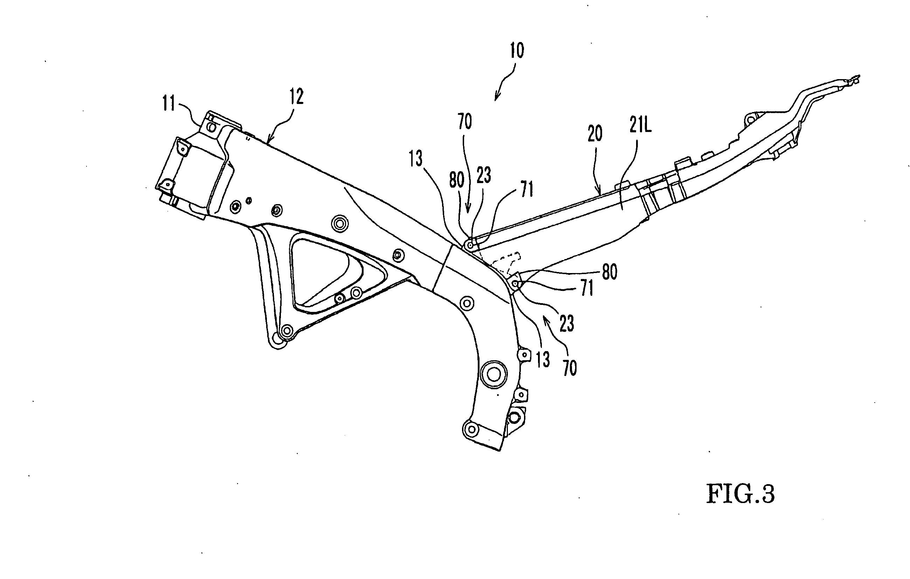

As shown in Fig. 3, the vehicle body frame 10 includes: a head pipe 11; a main frame 12 extend rearward and obliquely downward from the head pipe 11; and a rear frame 20 extending rearward and obliquely upward from an intermediate portion of the main frame 12. In this embodiment, the rear frame 20 is formed of magnesium alloy, which will be described in detail later. The rear frame 20 forms a first frame member and the main frame 12 forms a second frame member.

The main frame 12 is formed of material nobler in terms of electrochemical potential than the material of the rear frame 20. In this embodiment, the main frame 12 is formed of aluminum alloy. The main frame 12 has a bracket 13 for fixing the rear frame 20.

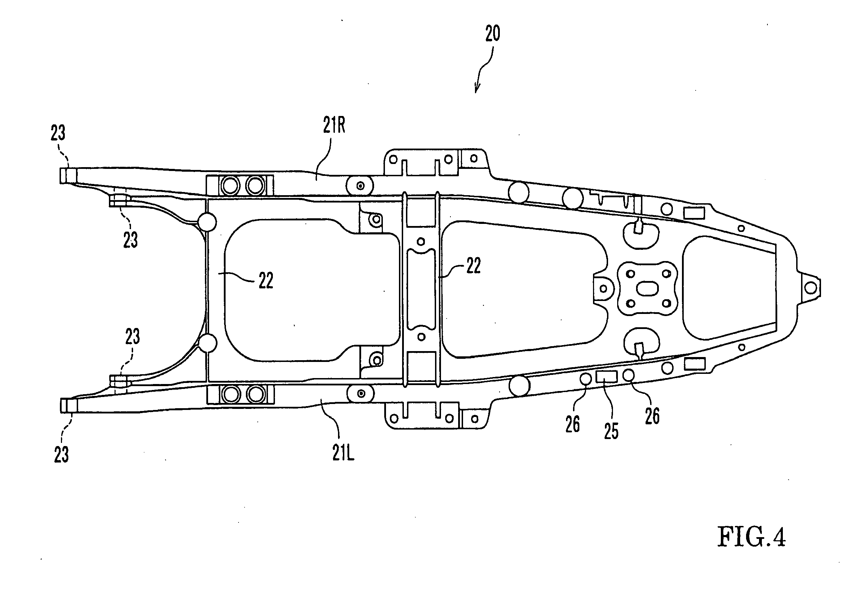

Fig. 4 is a plan view of the rear frame 20 that forms the first frame member. As shown in Fig. 4, the rear frame 20 includes a pair of left and right seat rails 21L, 21R and a cross member 22 for connecting the seat rails 21L, 21R.

The rear frame 20 is formed of material containing 50 weight % or more of magnesium, namely a magnesium-based material. It is preferable that the rear frame 20 is formed of material containing 90 weight % or more of magnesium, and here the rear frame 20 is formed of a magnesium alloy.

The rear frame 20 has its surface covered with an insulator. Here, the insulator may be an insulating material added to the surface of the rear frame 20 or may be formed by reforming the surface of the base material of the rear frame 20 (that is, the magnesium-based material or magnesium alloy) so that the surface has an insulation property. That is, the insulator may be a portion of the reformed base material. In this embodiment, the rear frame 20 is subjected to surface treatment so as to prevent electrolytic corrosion. The kind of the surface treatment is not limited to a special surface treatment, but, for example, the surface treatment of chromic acid chrome treatment (chromate treatment), phosphoric acid chrome treatment, phosphoric acid manganese treatment, or the like can be preferably used. Moreover, the rear frame 20 may have an insulating film formed on its surface by vapor deposition or the like or may have its surface coated with a coating material having an insulation property. When the rear frame 20 has its surface covered with the insulator in this manner, the rear frame 20 can be protected from electrolytic corrosion.

As shown in Fig. 4, a recess 25 recessed downward is formed in the rear portion of the seat rail 21L of the rear frame 20. Moreover, threaded holes 26 are formed forwards and behind the recess 25.

As shown in Fig. 3, fastening portions 80 to be fastened to the bracket 13 of the main frame 12, which forms the second frame member, are formed integrally with the rear frame 20 and in the upper and lower portions at the front end of the seat rail 21L. Here, although a right seat rail 21R is not shown in Fig. 3, the same fastening portions 80 are also formed on the right seat rail 21R. In the following description, only the fastening portions 80 of the left seat rail 21L will be described.

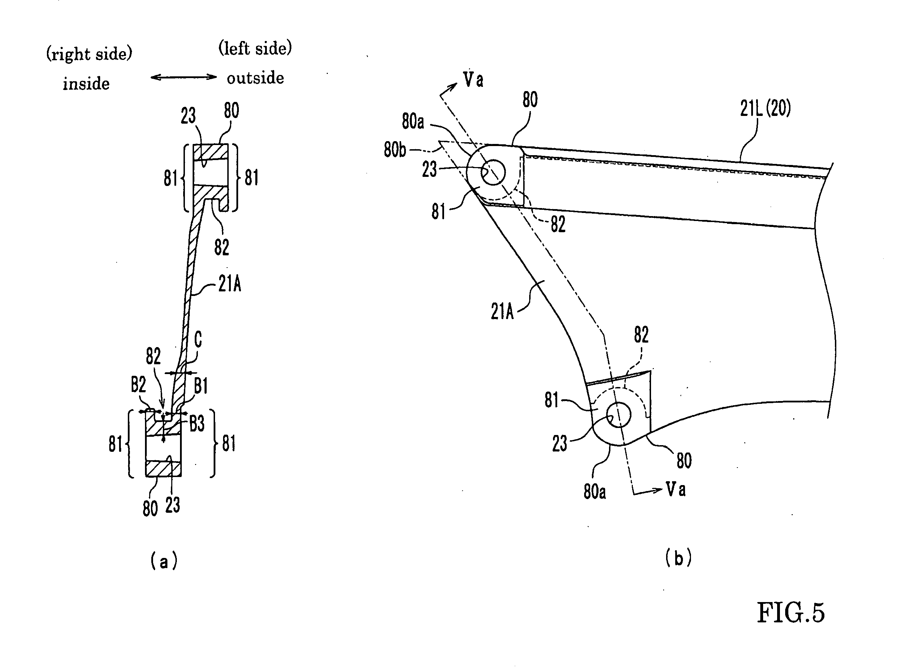

As shown in Fig. 5(a) and (b), the fastening portions 80 are connected to a side portion 2 1A of the rear frame 20 (here the seat rail 21L) and are larger in width in a lateral direction (that is, width in a left and right direction) than the side portion 21A. The upper fastening portion 80 and the lower fastening portion 80 have through holes 23 formed therein, respectively. Contact, or sitting, surfaces 81 are formed around the through holes 23 on one end side and on the other end side in the left and right direction of the fastening portions 80. As shown in Fig. 5(a), the fastening portion 80 has a recessed, or depressed portion 82 formed therein. The recessed portion 82 is formed in an outside portion in the radial direction of the through hole 23 in the fastening portion 80 and is recessed towards the through hole 23. Moreover, the recessed portion 82 is formed substantially in a middle portion in the axial direction (in the left and right direction in Fig. 5(a)) of the through hole 23 in the fastening portion 80, that is intermediate in the axial direction (in the left and right direction in Fig. 5(a)) of the through hole 23 in the fastening portion 80.

Here, in this embodiment, the upper fastening portion 80 in the seat rail 21L is positioned on the left side of the side portion 21A, and the lower fastening portion 80 is positioned on the right side of the side portion 21A. Although not shown, the upper fastening portion 80 in the seat rail 21R is positioned on the right side of the side portion 21A, and the lower fastening portion 80 is positioned on the left side of the side portion 21A. In other words, the upper fastening portions 80 are positioned outside the vehicle and the lower fastening portions 80 are positioned on the center side of the vehicle. However, the positions of the upper fastening portions 80 and the lower fastening portions 80 are not limited to special positions. The upper fastening portions 80 and the lower fastening portions 80 may be positioned opposite to each other with respect to the side portion 21A as shown in this embodiment, or may be positioned on the same side with respect to the side portion 21A.

As shown in Fig. 5(a), the thicknesses B1, B2 of both side portions of the recessed portion 82 of the fastening portion 80 are substantially equal to the thickness C of the side portion 21A of the seat rail 21L. Here, the description that "thicknesses are substantially equal to the thickness" means that both of the thicknesses are equal to each other in a degree in which a solidification crack is not caused at the time of casting. Here, the thickness of the side portion 21A of the seat rail 21L varies depending on the positions of the side portion 21A, but it is assumed that the average thickness at the front end portion of the seat rail 21L is thought as the thickness C of the side portion 21A. Moreover, in this embodiment, the thickness B3 in the radial direction of the through hole 23 in the fastening portion 80 (in detail, the thickness between the bottom surface of the recessed portion 82 and the inner peripheral surface of the through hole 23) is substantially equal to the thickness C of the side portion 21A.

As a result of this construction, the portions of the fastening portions 80 having the thickness B2 shown in Figure 5A form a flange portion for extending the contact surfaces 81 to define a larger surface area than the generally round (substantially circular) portion that immediately surrounds the through hole 23 as illustrated part in solid and part in dashed lines in Figure 5(b).

As shown in Fig. 5(b), when it is assumed that a corner portion 80b is at the end portion of the fastening portion 80, this corner portion 80b is a useless portion (so-called wasted portion). However, in this embodiment, the end portion 80a of the fastening portion 80 is formed in a rounded shape, which eliminates the corner portion 80b. The elimination of the corner portion 80b (indicated by double dot-dashed lines in Figure 5(b)) in the manner can prevent the occurrence of a thick portion in the fastening portion 80. Thus, in this embodiment, not only the formation of the recessed portion 82 but also the elimination of the corner portion 80b makes the rear frame 20 resist causing a solidification crack when the rear frame 20 is cast.

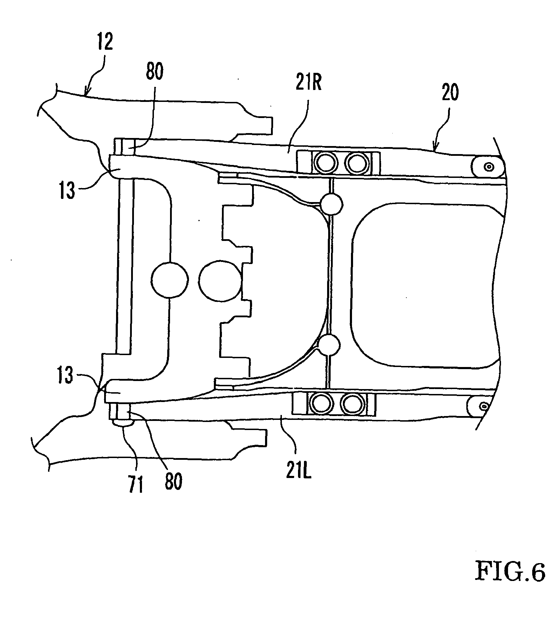

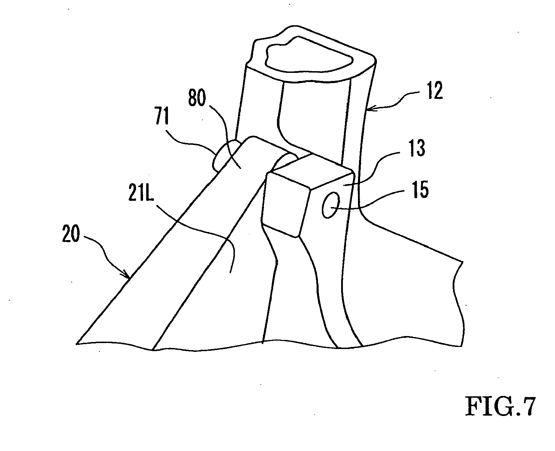

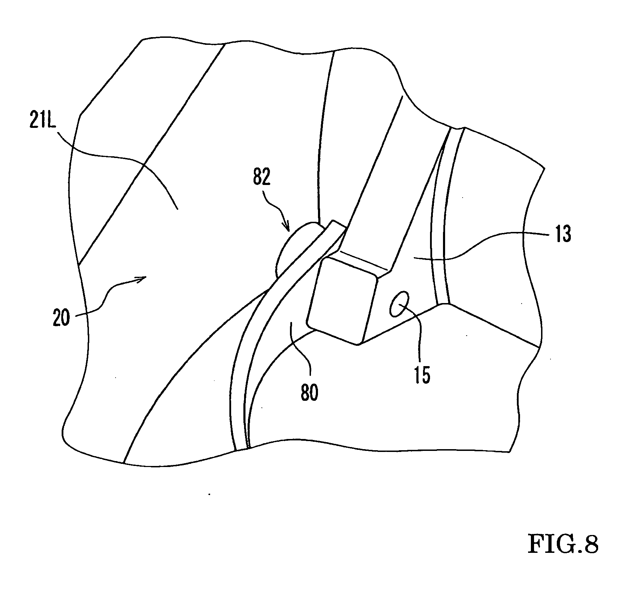

As shown in Fig. 6, Fig. 7, and Fig. 8, the fastening portion 80 of the rear frame 20 is fixed to the bracket 13 of the main frame 12 with a bolt 71, which will be later described in detail. That is, the rear frame 20 is fastened to the bracket 13 of the main frame 12 with the bolt 71 passed through the through hole 23 of the fastening portion 80 (see Fig. 5(a)).

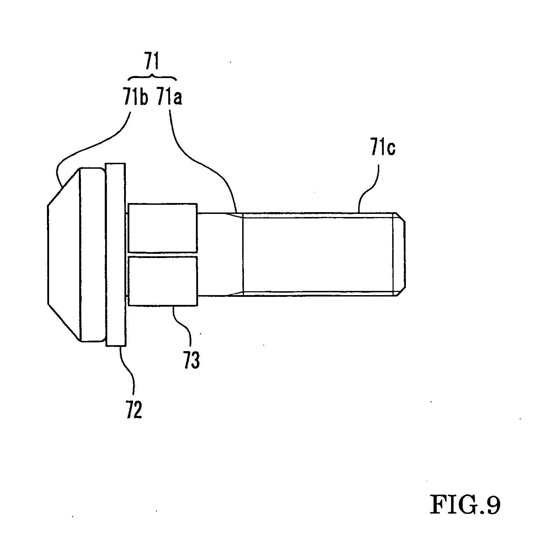

Next, the fastening structure 70 of the main frame 12 and the rear frame 20 will be described with reference to Fig. 9, Fig. 10, and Fig. 11. Here, the upper fastening structure 70 of the rear frame 20 is the same as that of the lower fastening structure, and so only the upper fastening structure 70 will be described in the following.

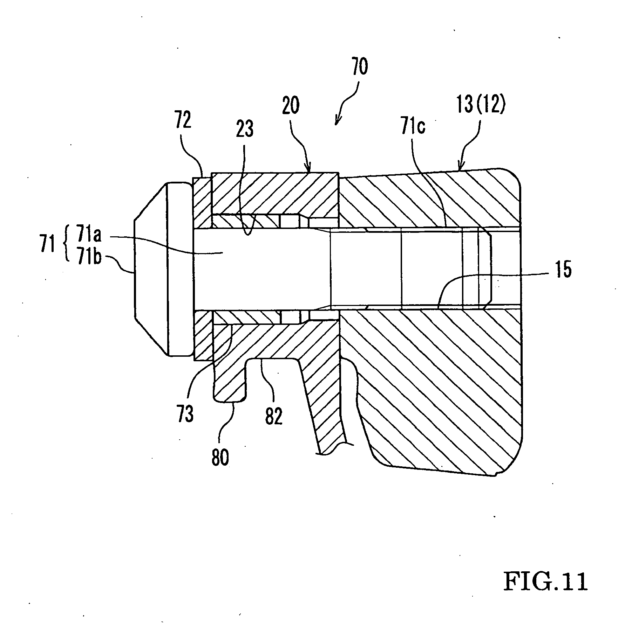

As shown in Fig. 9 and Fig. 11, the fastening structure 70 includes the bolt 71, a washer 72, and a collar 73. As described above, the fastening portion 80 of the rear frame 20 has the through hole 23 formed therein (see Fig. 11). The bracket 13 of the main frame 12 has a fastening hole 15 formed therein. In this embodiment, the fastening hole 15 is a hole in which the shaft portion 71a of the bolt 71 to be described later is screwed. The fastening hole 15 of this embodiment has a threaded groove (not shown) formed thereon. However, the fastening hole 15 may be a hole without a threaded groove formed thereon. The shape of the fastening hole 15 can be set as appropriate according to a fastening part. The inside diameter of the through hole 23 is made larger than the inside diameter of the fastening hole 15.

The bolt 71 is made of material different from magnesium-based material and is made of iron in this embodiment. However, the material of the bolt 71 is not limited to iron but may be other material such as stainless steel. The bolt 71 has the shaft portion 71a that has a threaded 71c formed on one portion on its tip side and a head portion 71b that is formed on the root side of the shaft portion 71a and that has a larger diameter than the shaft portion 71a.

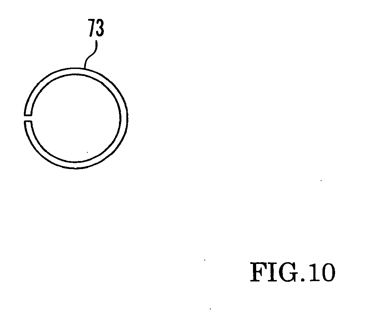

The collar 73 is made of aluminum-based material and is made of aluminum alloy in this embodiment. The collar 73 covers a portion of the periphery of the shaft portion 71a of the bolt 71 and is interposed between the shaft portion 71a and the inner peripheral surface of the through hole 23 of the rear frame 20. The specific shape of the collar 73 is not limited to a special shape, but in this embodiment, as shown in Fig. 10, the collar 73 is formed in the shape of a letter C in section. The inside diameter of the collar 73 becomes smaller than the outside diameter of the shaft portion 71a in the state where the collar 73 is not fitted on the shaft portion 71a of the bolt 71. On the other hand, the collar 73 is formed in the shape of a letter C in section, so that the collar 73 can be easily enlarged in diameter by the human force, and after the collar 73 is enlarged in diameter, the collar 73 produces a restoring force in a direction to contract the diameter thereof. In this manner, according to this embodiment, the collar 73 is formed in the shape of a letter C in section, so that the collar 73 can be easily fitted on the shaft portion 71a. That is, when the collar 73 is fitted on the shaft portion 71a, by enlarging the diameter of the collar 73 by a finger, it is easy to insert the shaft portion 71a into the collar 73. Moreover, after the shaft 71a is inserted into the collar 73, when the finger is taken off the collar 73, the collar 73 has its diameter contracted by its restoring force and hence is fixed to the shaft 71a. Here, in this embodiment, the collar 73 is only fitted on the shaft portion 71a and an adhesive or the like is not used. That is, the collar 73 is not joined to the shaft portion 71a, but the collar 73 can be also joined to the shaft portion 71a.

The washer 72 is made of aluminum-based material and is made of aluminum alloy in this embodiment. As shown in Fig. 9, the washer 72 has the shaft portion 71a of the bolt 71 passed therethrough and is interposed between the head portion 71b of the bolt 71 and the collar 73. Moreover, as shown in Fig. 11, the washer 72 is interposed between the head portion 71b and the rear frame 20 after the bolt 71 is fastened. The washer 72 is a part separate from the collar 73. That is, the washer 72 can be separated from the collar 73 and can be rotated independently of the collar 73.

When the rear frame 20 is fixed to the bracket 13, the through hole 23 of the rear frame 20 is aligned in position with the fastening hole 15 of the bracket 13, and then the bolt 71 having the washer 72 and the collar 73 previously fitted thereon is screwed into the through hole 23 and the fastening hole 15. At this time, the washer 72 is a part separate from the collar 73, so that even when the bolt 71 is rotated integrally with the collar 73, the washer 72 is not rotated integrally with the bolt 71. For this reason, when the bolt 71 is fastened, the bolt 71 and the washer 72 are rotated relatively to each other, so that the loss of fastening torque can be decreased.

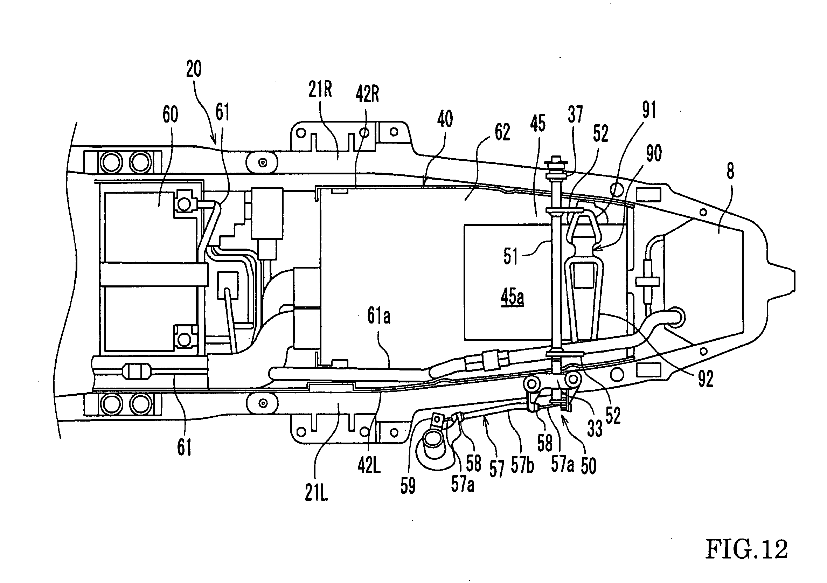

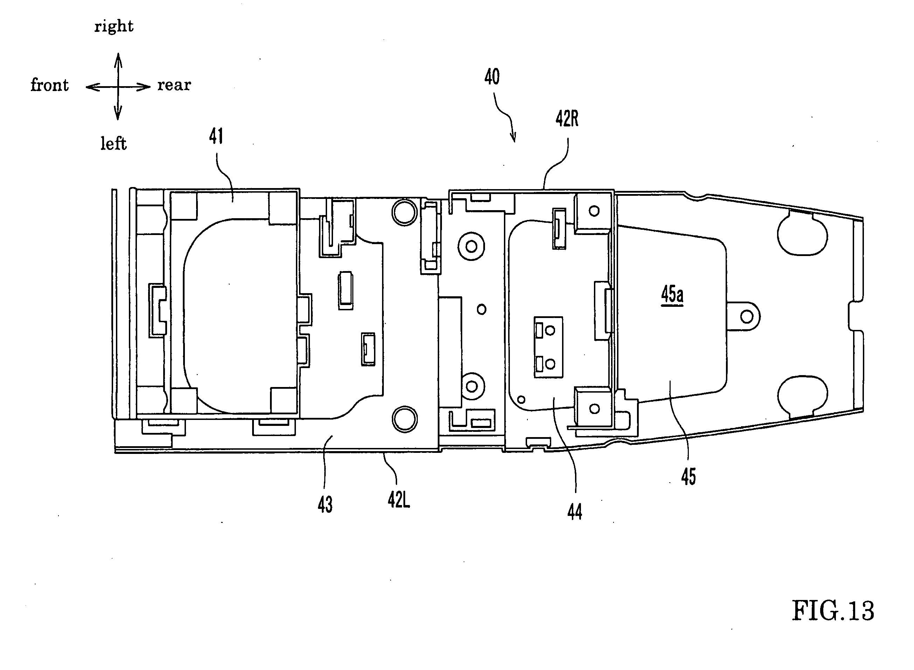

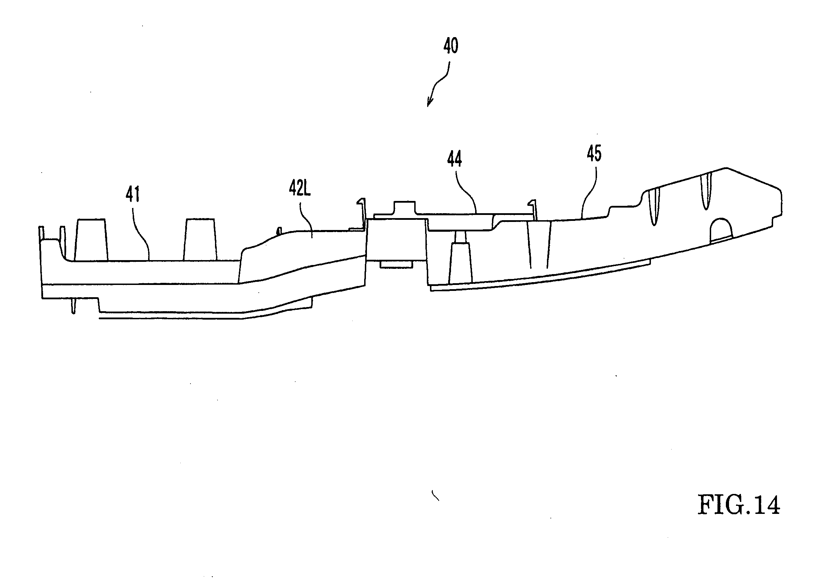

As shown in Fig. 12, a battery box 40 is arranged inside the rear frame 20. Fig. 13 is a plan view of the battery box 40, and Fig. 14 is a side view of the battery box 40. The battery box 40 is formed of material that does not substantially cause electrolytic corrosion even when it is put into contact with magnesium-based material. Nonmetal material is preferably used as the material of the battery box 40. In this embodiment, the battery box 40 is integrally formed of synthetic resin.

As shown in Fig. 13, in the battery box 40 according to this embodiment, length in the front and rear direction is longer than length in the left and right direction. The battery box 40 includes a battery supporting part 41 for supporting a battery 60 (see Fig. 12). Moreover, the battery box 40 includes left and right side plates 42L, 42R extended in the front and rear direction. The side plates 42L, 42R are erected from a bottom plate 43. The left side plate 42L is extended rearward from the left side of the battery supporting part 41. The right side plate 42R is extended in the front and rear direction rearward of the battery supporting part 41. In this embodiment, the left side plate 42L is positioned at the left end of the battery box 40, and the right side plate 42R is positioned at the right end of the battery box 40. The battery box 40 of this embodiment does not have a portion protruded to the left side from the left side plate 42L nor has a portion protruded to the right side from the right side plate 42R. However, the shape of the battery box 40 is not limited to a special shape.

As shown in Fig. 12, the battery box 40 is arranged above a cross member 22 of the rear frame 20 (see Fig. 4) and inside the seat rails 21L, 21R. The right side plate 42R covers the left side of the right seat rail 21R. On the other hand, the left side plate 42L covers the right side of the left seat rail 21L. That is, the side plates 42L, 42R are arranged so as to cover the sides on the center side of the vehicle of the seat rails 21L, 21R and are extended in the front and rear direction along the seat rails 21L, 21R.

Moreover, as shown in Fig. 13, the battery box 40 according to this embodiment includes an ECU supporting part 44 for supporting an ECU (Electric Control Unit) 62 (see Fig. 12). The ECU supporting part 44 is disposed rearward of the battery supporting part 41. In other words, the rear portion of the battery supporting part 41 is extended rearward to construct the ECU supporting part 44.

Furthermore, a tool box part 45 partitioning a space in which tools are stored (hereinafter referred to as "tool storage space") 45a is disposed on the rear side of the ECU supporting part 44 in the battery box 40. The tool box part 45 is formed as a depression, or recess, and various tools are stored in the tool box part 45. In this manner, in this embodiment, the rear portion of the battery supporting part 41 is extended rearward to construct the tool box part 45.

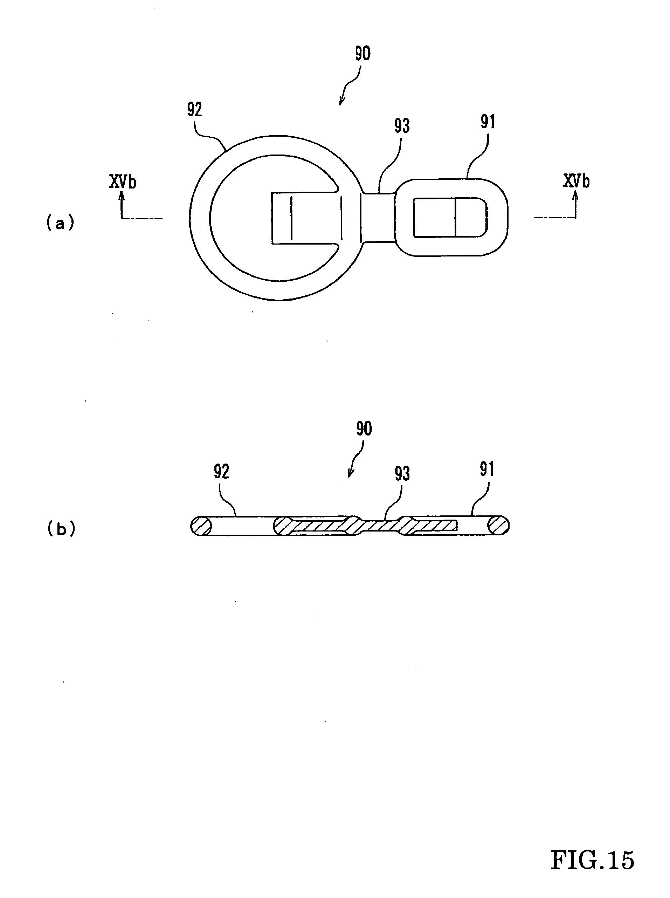

A reference numeral 90 shown in Fig. 12 is a tool band. The tool band 90 presses the tools and the like stored in the tool box part 45 to fix them. As shown in Fig. 15(a) and Fig. 15(b), in this embodiment, the tool band 90 is integrally formed of rubber. That is, the whole of the tool band 90 is formed of rubber. The tool band 90 includes a first fixing ring 91, a second fixing ring 92, and a connection portion 93 for connecting the first fixing ring 91 and the second fixing ring 92.

As shown in Fig. 12, the battery 60 has plural harnesses 61 connected thereto. A part 61a of harnesses is extended in the front and rear direction along the left seat rail 21L inside the seat rail 21L. This harness 61a is extended toward the tail lamp unit 8 from the battery 60.

Here, in this specification, the description that "a part is extended in the front and rear direction" means that a part is extended in the front and rear direction as a whole. For this reason, even when the part has a portion curved or bent, if the part is extended in the front and rear direction as a whole, it can be said that "the part is extended in the front and rear direction". Moreover, not only the case where the part is extended in the front and rear direction in a strict meaning but also even the case where a portion or the whole of the part is extended slantwise in the front and rear direction can be included the description that "a part is extended in the front and rear direction" which has been described above.

In this manner, the harness 61a is arranged along the seat rail 21L, and according to this embodiment, the side plate 42L of the battery box 40 is interposed between the seat rail 21L and the harness 61a. Thus, this can prevent the harness 61a from being put into contact with the seat rail 21L.

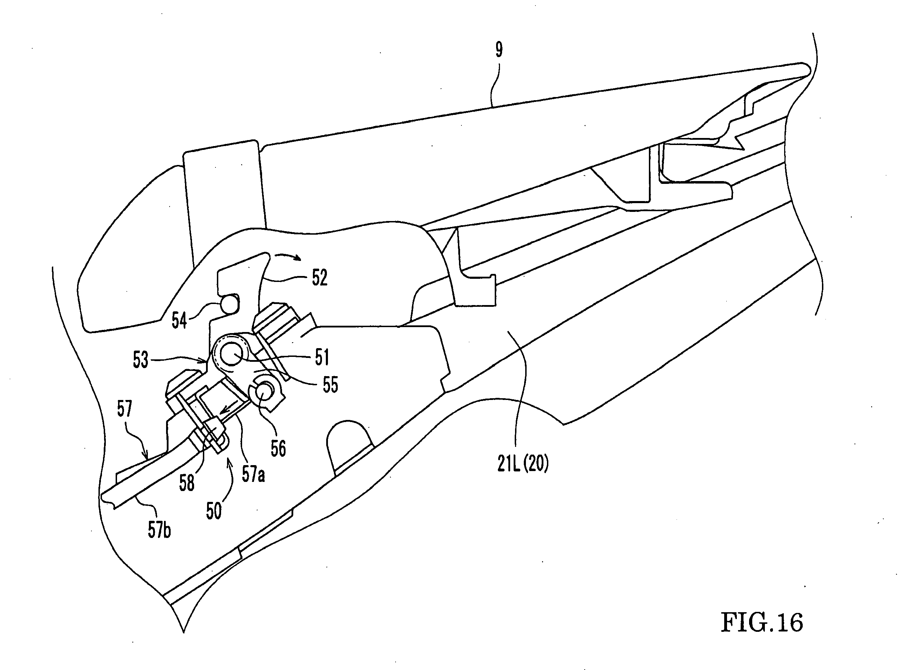

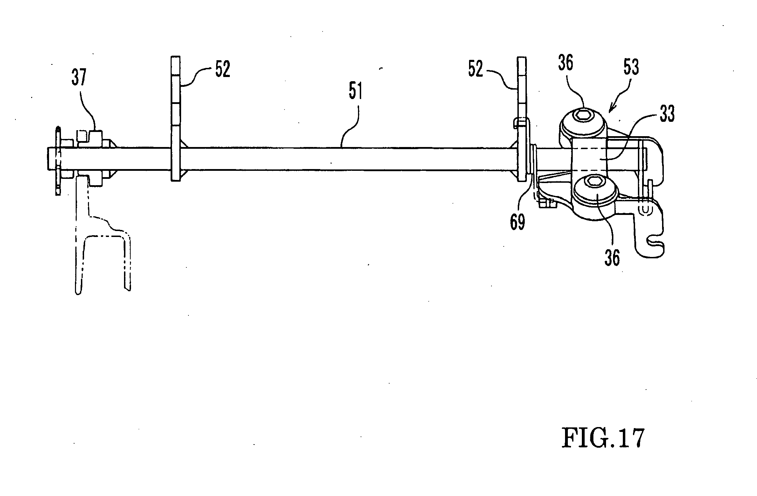

The tandem seat 9 (see Fig. 1) is formed so as to be removable. As shown in Fig. 16 and Fig. 17, the motorcycle 1 is provided with a seat lock device 50 for locking the tandem seat 9. The seat lock device 50 includes: a rotary shaft 51 extended in the left and right direction; a hook 52 fixed to the rotary shaft 51 so as to be rotated with the rotary shaft 51; a bearing structure 53 for rotatably supporting the rotary shaft 51 on the seat rail 21L; and a lock bar 54 engaged with the hook 52. Although not shown, the lock bar 54 is fixed to the inside portion of the tandem seat 9. For this reason, the hook 52 is indirectly engaged with the tandem seat 9 via the lock bar 54. However, the hook 52 may be a part engaged with a portion of the tandem seat 9, in other words, a part directly engaged with the tandem seat 9.

As shown in Fig. 16, the rotary shaft 51 has one end portion of a lever 55 fixed thereto, the lever 55 being rotated with the rotary shaft 51. The lever 55 has an engaging part 56 rotatably engaged with its other end. The seat lock device 50 includes a cable 57 having an inner wire 57a and an outer tube 57b. One end portion of the outer tube 57b is fixed by a stopper 58. One end portion of the inner wire 57a is protruded from the one end portion of the outer tube 57b. The inner wire 57a has the engaging part 56 fixed to its one end portion. As shown in Fig. 12, the other end portion (that is, the front end portion) of the outer tube 57b is also fixed by the stopper 58. The other end portion of the inner wire 57a is protruded also from the other end portion of the outer tube 57b. The inner wire 57a has a lever 59 engaged with its other end portion.

When the tandem seat 9 is unlocked, the lever 59 is turned to pull the inner wire 57a to the other end side (that is, to the front side). Then, as shown in Fig. 16, the engaging part 56 fixed to the one end side of the inner wire 57a is pulled to the other end side, and the lever 55 is turned clockwise in Fig. 16 via the engaging part 56. As a result, the rotary shaft 51 is also turned clockwise. With this, the hook 52 fixed to the rotary shaft 51 is also turned clockwise, and the hook 52 is disengaged from the lock bar 54, and hence the tandem seat 9 is unlocked. As shown in Fig. 17, the hook 52 has a spring 69 fixed thereto, the spring 69 biasing the hook 52 to a lock position side. Here, the lock position means a position where the hook 52 is engaged with the lock bar 54 (that is, position shown in Fig. 16). When the hand is taken off the lever 59 (see Fig. 12), the hook 52 is returned to the lock position by the spring 69. With this, the inner wire 57a is pulled to the one end side and the lever 59 is returned to the initial position.

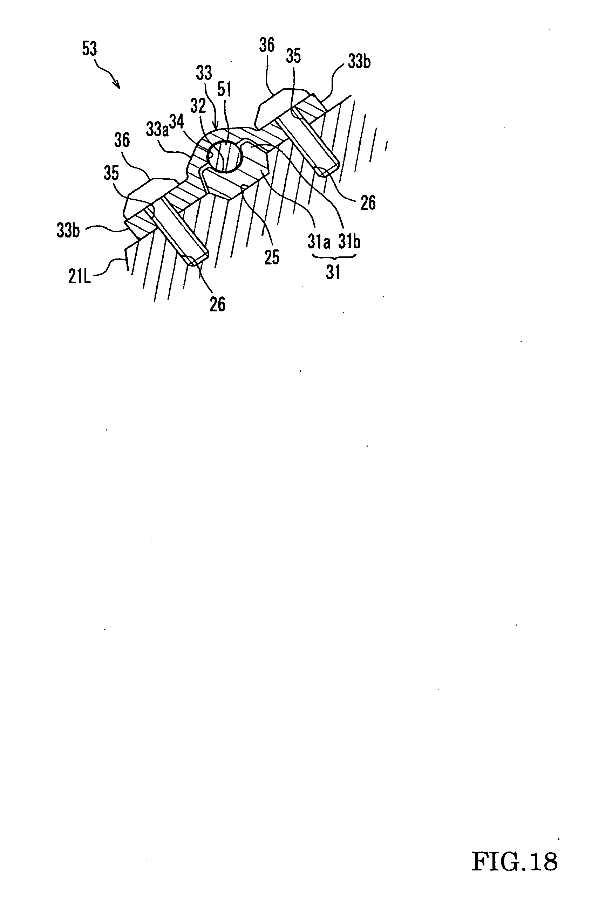

As shown in Fig. 12 and Fig. 17, the left end portion of the rotary shaft 51 is rotatably supported by the bearing structure 53. The right end portion of the rotary shaft 51 is rotatably supported by a bearing 37. Next, the bearing structure 53 for rotatably supporting the rotary shaft 51 of the seat lock device 50 will be described with reference to Fig. 18.

As described above, the seat rail 21L of the rear frame 20 has the downwardly extending depression 25 formed thereon (see also Fig. 4). Moreover, the threaded holes 26 are formed before and behind the depression 25.

The depression 25 has a bearing part 31 fitted therein. The bearing part 31 is formed of material that does not cause electrolytic corrosion substantially even when it is in contact with magnesium-based material. Here, the material that does not cause electrolytic corrosion substantially even when it is in contact with magnesium-based material means material that has a small potential difference with respect to the magnesium-based material or an insulating material (for example, resin, rubber, Alumite coating, or coating film). In this embodiment, the bearing part 31 is made of nonmetal material and, in particular, of resin material. However, of course, the material of the bearing part 31 is not limited to the resin material. The lower portion 31a of the bearing part 31 is fitted in the depression 25 of the seat rail 21L. In this embodiment, the depression 25 has an inverse trapezoid cross section, and the lower portion 31a of the bearing part 31 has an inverse trapezoid cross section according to the sectional shape of the depression 25. The upper portion 31b of the bearing part 31 has nearly a trapezoid cross section which is symmetric in the up and down direction with respect to the lower portion 31a. The upper portion 31b has a circular arc-shaped depression 32 formed on its top surface.

The rotary shaft 51 is supported by the depression 32 of the bearing part 31. The rotary shaft 51 is made of metal material having higher potential than magnesium, and in this embodiment, the rotary shaft 51 is made of iron-based material.

A press part 33 made of aluminum-based material is arranged on the top side of the rotary shaft 51. In this embodiment, the press part 33 is formed of aluminum alloy. The center portion 33a of the press part 33 is formed in the shape of an arch. A circular arc-shaped depression 34 recessed upward is formed on the bottom side of the center portion 33a. The upper portion of the rotary shaft 51 is fitted in the depression 34. With this, the rotary shaft 51 is sandwiched between the depression 34 of the press part 33 and the depression 32 of the bearing part 31 and is rotatably supported by them. Flat portions 33b each having a threaded hole 35 formed therein are formed on both front and rear sides of the press part 33. The bottom surface of the flat portion 33b is in contact with the top surface of the seat rail 21L. Here, the press part 33 is in direct contact with the seat rail 21L, but the press part 33 is formed of aluminum alloy, so that electrolytic corrosion is not substantially caused on the seat rail 21L.

Screws 36 are inserted into the threaded hole 35 of the press part 33 and into the threaded hole 26 of the seat rail 21L. The press part 33 is fixed to the seat rail 21L with these screws 36. Since the press part 33 is fixed to the seat rail 21L, the rotary shaft 51 and the bearing part 31 are sandwiched between the press part 33 and the seat rail 21L. In other words, the rotary shaft 51 is rotatably supported by the bearing part 31 in the state where the rotary shaft 51 is pressed onto the bearing part 31 by the press part 33.

As described above, the rear frame 20 according to this embodiment is a casting of magnesium alloy and has the fastening portion 80 in which the through hole 23 having the bolt 71 passed therethrough is formed.
The fastening portion 80 has contact surfaces 81 formed on the one end side and the other end side of the fastening portion 80, the contact surfaces 81 being to be placed on the bracket 13 of the main frame 12. The fastening portion 80 has the recessed portion 82 formed in its middle portion, that is intermediate the length of the fastening portion in an axial direction. In this manner, according to the rear frame 20 of this embodiment, the fastening portion 80 has the recessed portion 82 formed in its middle portion, so that it is possible to ensure the large contact surface 81 of the fastening portion 80 (over a flange-like portion that extends in the region of the recessed portion 82) and to prevent a thick portion from being produced in the fastening portion 80. Thus, it is possible to prevent the rear frame 20 from causing a solidification crack at the time of casting in spite of the fact that the rear frame 20 is a casting of magnesium alloy.

In the rear frame 20 according to this embodiment, the fastening portions 80 are formed on the upper and lower portions on the front side of the side portions 21A of the left and right seat rails 20L, 20R, respectively. According to this embodiment, as described above, the rear frame 20 resists causing a solidification crack at the time of casting, so that the suitable rear frame 20 having the fastening portions 80 arranged in the manner described above can be stably manufactured without greatly decreasing its yield.

Moreover, as shown in Fig. 5(a), in the rear frame 20 according to this embodiment, the thickness C of the side portion 21A of the seat rail 20L is substantially equal to the thicknesses B2, B1 of both side portions of the depressed portion 82 of the fastening portion 80. For this reason, a portion whose thickness varies sharply is not produced between the side portion 21A and the fastening portion 80. Thus, it is possible to further prevent the rear frame 20 from causing a solidification crack at the time of casting the rear frame 20.

Furthermore, according to the rear frame 20 of this embodiment, the depressed portion 82 of the upper fastening portion 80 and the depressed portion 82 of the lower fastening portion 80 are positioned opposite each other across the side portion 21A. In other words, of the depressed portion 82 of the upper fastening portion 80 and the recessed portion 82 of the lower fastening portion 80, one is disposed on the left side of the side portion 21A, and the other is disposed on the right side of the side portion 21A. Since the fastening portions 80 are arranged in good balance as stated above, the strength of joining the main frame 12 and the rear frame 20 can be increased.

In this specification, the term of "magnesium-based material" means material containing 50 weight % or more magnesium and, typically, material containing 90 weight % or more magnesium.

The phrase of "covered with an insulator" includes not only the case where another material having an insulation property is added to the surface of base material but also the case where surface treatment is performed to base material to add an insulation property to the surface of the base material.

Where it is said that "the thickness of a main portion is substantially equal to the thicknesses of both side portions of a depressed portion of a fastening portion", this means that the thicknesses of both portions are equal to a degree in which a solidification crack is not caused at the time of casting, for example, that the thickness of the one portion is about 0.5 to 2 times the thickness of the other portion.

The term of "fastening part" means a part for fastening plural parts and includes, for example, a bolt, a screw, or the like.

The present invention is useful for a frame of a vehicle and a vehicle such as a motorcycle provided with the frame.

### Description of the Reference Numerals

- 1: motorcycle
- 10: vehicle body frame (frame for vehicle)
- 12: main frame (second frame)
- 20: rear frame (first frame)
- 21L, 21R: seat rail
- 21A: side portion (main portion)
- 23: through hole
- 71: bolt (fastening part)
- 80: fastening portion
- 81: contact surface
- 82: recessed, or depressed, portion
- B1, B2: thickness of both side portions of recessed portion of fastening portion
- C: thickness of side portion.

## Claims

1. A frame member (20) for a vehicle (1), the frame member comprising a main portion (21A) and a fastening portion (80), the fastening portion having a through hole (23) formed therein and the through hole being configured to receive a fastening part (71) therethrough, wherein:
the fastening portion has a contact surface (81) formed around at least one end of the through hole, the contact surface being for contacting another frame member (12),
the fastening portion has a recessed portion (82) formed in a portion that is located outside in a radial direction with respect to the through hole and intermediate in an axial direction with respect to the through hole, the recessed portion being recessed towards the through hole, **characterized in that** the frame member is cast of magnesium-based material and
an average thickness (C) of a part of the main portion adjacent the fastening portion is substantially equal to the thicknesses (B1, B2) of each of the side portions of the recessed portion and to the thickness (B3) between the bottom surface of the recessed portion and the inner peripheral surface of the through hole.

2. The frame member of claim 1, wherein the fastening portion projects from the main portion.

3. The frame member of claim 1 or claim 2, wherein the main portion comprises a first side portion and a second side portion, each side portion comprising at least one fastening portion at one end of the side portion (21A).

4. The frame member of claim 3, wherein, for each of said first and second side portions, an upper fastening portion is provided at an upper position at said one end of said side portion and a lower fastening portion is provided at a lower position at said one end of said side portion.

5. The frame member of claim 4,
wherein, for each of said first and second side portions, a recessed portion of the upper fastening portion and a recessed portion of the lower fastening portion are such that one recessed portion is disposed on one side of the side portion and the other recessed portion is disposed on the other side of the side portion.

6. The frame member of any one of the preceding claims, wherein the recessed portion of a said fastening portion defines a flange portion that provides the contact surface of the fastening portion.

7. A frame (10) for a vehicle (1), the frame comprising the frame member of any one of the preceding claims as a first frame member and another frame member (12) as a second frame member fastened thereto,
wherein the first frame member includes a pair of left and right side portions, each of the pair of side portions having fastening portions formed in upper and lower portions proximate a front thereof, the fastening portions being fastened to the second frame member at the contact surface of each fastening portion by a fastening part (71).

8. The frame of claim 7,
wherein the first frame member forms a rear frame of a motorcycle, and the second frame member forms a main frame of the motorcycle fastened at the front of the rear frame.

9. A vehicle (1) comprising the frame member of any of claims 1 to 6 or the frame (10) of claim 7.

10. The vehicle of claim 9, wherein the vehicle is a motorcycle.

11. A motorcycle comprising the frame of claim 8.

## Patentansprüche

1. Rahmenteil (20) für ein Fahrzeug, wobei das Rahmenteil einen Hauptabschnitt (21A) und einen Befestigungsabschnitt (80) aufweist, in dem Befestigungsabschnitt ein Durchgangsloch (23) gebildet ist und das Durchgangsloch eine Ausgestaltung hat, um ein Befestigungsteil (71) durch das Loch hindurch aufzunehmen, wobei:
der Befestigungsabschnitt eine Kontaktoberfläche (81) hat, die um mindestens ein Ende des Durchgangsloches herum gebildet ist und für das Berühren eines anderen Rahmenteils (12) vorgesehen ist,
der Befestigungsabschnitt einen ausgesparten Abschnitt (82) hat, der in einem Abschnitt gebildet ist, welcher in einer radialen Richtung bezüglich des Durchgangsloches außen und dazwischen liegend in einer axialen Richtung bezüglich des Durchgangsloches angeordnet ist, wobei der ausgesparte Abschnitt gegen das Durchgangsloch hin ausgespart ist, **dadurch gekennzeichnet, dass** das Rahmenteil aus einem Material auf Magnesiumbasis gegossen ist und
eine Durchschnittsdicke (C) eines Teils des Hauptabschnittes neben dem Befestigungsabschnitt im Wesentlichen gleich ist der Dicke (B1, B2) jedes der Seitenabschnitte des ausgesparten Abschnittes sowie der Dicke (B3) zwischen der Bodenoberfläche des ausgesparten Abschnittes und der inneren Umfangsoberfläche des Durchgangsloches.

2. Rahmenteil nach Anspruch 1, wobei der Befestigungsabschnitt von dem Hauptabschnitt vorspringt.

3. Rahmenteil nach Anspruch 1 oder Anspruch 2, wobei der Hauptabschnitt einen ersten Seitenabschnitt und einen zweiten Seitenabschnitt aufweist und jeder Seitenabschnitt mindestens einen Befestigungsabschnitt an einem Ende des Seitenabschnittes (21A) aufweist.

4. Rahmenteil nach Anspruch 3, wobei für jeden der ersten und zweiten Seitenabschnitte ein oberer Befestigungsabschnitt an einer oberen Position an dem einen Ende des Seitenabschnittes vorgesehen ist und ein unterer Befestigungsabschnitt an einer unteren Position an dem einen Ende des Seitenabschnittes vorgesehen ist.

5. Rahmenteil nach Anspruch 4, wobei für jeden der ersten und zweiten Seitenabschnitte ein ausgesparter Abschnitt des oberen Befestigungsabschnittes und ein ausgesparter Abschnitt des unteren Befestigungsabschnittes so vorgesehen sind, dass ein ausgesparter Abschnitt auf einer Seite des Seitenabschnittes und der andere ausgesparte Abschnitt auf der anderen Seite des Seitenabschnittes angeordnet sind.

6. Rahmenteil nach einem der vorhergehenden Ansprüche, wobei der ausgesparte Abschnitt des Befestigungsabschnittes einen Flanschabschnitt bildet, welcher die Kontaktoberfläche des Befestigungsabschnittes vorsieht.

7. Rahmen (10) für ein Fahrzeug (1), wobei der Rahmen das Rahmenteil nach einem der vorhergehenden Ansprüche als ein erstes Rahmenteil und ein anderes Rahmenteil (12) als ein zweites an diesem befestigten Rahmenteil aufweist,
wobei das erste Rahmenteil ein Paar von linken und rechten Seitenabschnitten aufweist, jeder des Paares von Seitenabschnitten Befestigungsabschnitte hat, die in oberen und unteren Abschnitten nahe seiner Vorderseite gebildet sind, wobei die Befestigungsabschnitte an der Kontaktoberfläche jedes Befestigungsabschnittes durch ein Befestigungsteil (71) an dem zweiten Rahmenteil befestigt sind.

8. Rahmen nach Anspruch 7,
wobei das erste Rahmenteil einen rückwärtigen Rahmen eines Motorrades bildet und das zweite Rahmenteil einen Hauptrahmen des Motorrades bildet, welcher vorne an dem rückwärtigen Rahmen befestigt ist.

9. Fahrzeug (1) mit dem Rahmenteil nach einem der Ansprüche 1 bis 6 oder dem Rahmen (10) nach Anspruch 7.

10. Fahrzeug nach Anspruch 9, wobei das Fahrzeug ein Motorrad ist.

11. Motorrad mit dem Rahmen nach Anspruch 8.

## Revendications

1. Elément formant cadre (20) pour un véhicule (1), l'élément formant cadre comprenant une portion principale (21 A) et une portion de fixation (80), un trou débouchant (23) étant formé dans la portion de fixation et le trou débouchant étant configuré pour recevoir une partie de fixation (71), dans lequel :
la portion de fixation a une surface de contact (81) formée autour d'au moins une extrémité du trou débouchant, la surface de contact étant destinée à entrer en contact avec un autre élément formant cadre (12),
la portion de fixation comprend une portion évidée (82) formée dans une portion qui est située à l'extérieur dans une direction radiale par rapport au trou débouchant et intermédiaire dans une direction axiale par rapport au trou débouchant, la portion évidée étant évidée en direction du trou débouchant, **caractérisée en ce que** l'élément formant cadre est coulé à partir d'un matériau à base de magnésium et
une épaisseur moyenne (C) d'une partie de la portion principale adjacente à la portion de fixation est sensiblement égale aux épaisseurs (B1, B2) de chacune des portions latérales de la portion évidée et à l'épaisseur (B3) entre la surface inférieure de la portion évidée et la surface périphérique intérieure du trou débouchant.

2. Elément formant cadre selon la revendication 1, dans lequel la portion de fixation fait saillie depuis la portion principale.

3. Elément formant cadre selon la revendication 1 ou la revendication 2, dans lequel la portion principale comprend une première portion latérale et une deuxième portion latérale comprenant au moins une portion de fixation à une extrémité de la portion latérale (21 A).

4. Elément formant cadre selon la revendication 3, dans lequel, pour chacune desdites première et deuxième portions latérales, une portion supérieure de fixation est placée dans une position supérieure sur ladite une extrémité de ladite portion latérale et une portion inférieure de fixation est placée dans une position inférieure sur ladite une extrémité de ladite portion latérale.

5. Elément formant cadre selon la revendication 4,
dans lequel, pour chacune desdites première et deuxième portions latérales, une portion évidée de la portion supérieure de fixation et une portion évidée de la portion inférieure de fixation sont telles qu'une portion évidée est disposée d'un côté de la portion latérale et que l'autre portion évidée est disposée de l'autre côté de la portion latérale.

6. Elément formant cadre selon l'une quelconque des revendications précédentes, dans lequel la portion évidée d'une dite portion de fixation définit une portion de rebord qui fournit la surface de contact de la portion de fixation.

7. Cadre (10) pour un véhicule (1), le cadre comprenant l'élément formant cadre selon l'une quelconque des revendications précédentes comme premier élément formant cadre et un autre élément formant cadre (12) comme deuxième élément formant cadre fixé dessus,
dans lequel le premier élément formant cadre comprend une paire de portions latérales droite et gauche, chaque portion de la paire de portions latérales ayant des portions de fixation formées dans des portions supérieure et inférieure à proximité de leur partie avant, les portions de fixation étant fixées sur le deuxième élément formant cadre par la surface de contact de chaque portion de fixation au moyen d'une partie de fixation (71).

8. Cadre selon la revendication 7,
dans lequel le premier élément formant cadre forme un cadre arrière d'une motocyclette, et le deuxième élément formant cadre forme un cadre principal de la motocyclette fixé à l'avant du cadre arrière.

9. Véhicule (1) comprenant l'élément formant cadre selon l'une quelconque des revendications 1 à 6 ou le cadre (10) selon la revendication 7.

10. Véhicule (1) selon la revendication 9, dans lequel le véhicule est une motocyclette.

11. Motocyclette comprenant le cadre selon la revendication 8.
